(19) Europäisches Patentamt

European Patent Office

Office européen des brevets

(11) **EP 3 143 583 B1**

(12) **EUROPEAN PATENT SPECIFICATION**

(45) Date of publication and mention of the grant of the patent:
**31.10.2018 Bulletin 2018/44**

(21) Application number: **15807144.9**

(22) Date of filing: **12.06.2015**

(51) Int Cl.:
*G06T 5/50* (2006.01)    *H04N 5/225* (2006.01)

(86) International application number:
**PCT/US2015/035554**

(87) International publication number:
**WO 2015/191998 (17.12.2015 Gazette 2015/50)**

(54) **SYSTEM AND METHOD FOR IMPROVED COMPUTATIONAL IMAGING**

SYSTEME UND VERFAHREN ZUR VERBESSERTEN COMPUTERGESTÜTZTEN BILDGEBUNG

SYSTÈME ET PROCÉDÉ D'IMAGERIE INFORMATIQUE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2014 US 201462011129 P**

(43) Date of publication of application:
**22.03.2017 Bulletin 2017/12**

(73) Proprietor: **Duke University Durham, NC 27705 (US)**

(72) Inventors:
• **BRADY, David, Jones**
  **Durham, NC 27713 (US)**
• **CARIN, Lawrence, L.**
  **Chapel Hill, NC 27514 (US)**
• **LIULL, Patrick, Ryan**
  **Durham, NC 27705 (US)**
• **YUAN, Xin**
  **Murray Hill, New Jersey 07974 (US)**

(74) Representative: **Williams, David John Page White & Farrer Bedford House John Street London WC1N 2BF (GB)**

(56) References cited:
**US-A1- 2013 057 681      US-A1- 2013 266 241
US-A1- 2013 314 586      US-B2- 7 711 201
US-B2- 8 451 338         US-B2- 8 553 093**

• HAUSLER ET AL: "A method to increase the depth of focus by two step image processing", OPTICS COMMUNICATIONS, ELSEVIER, AMSTERDAM, NL, vol. 6, no. 1, September 1972 (1972-09), pages 38-42, XP024491435, ISSN: 0030-4018, DOI: 10.1016/0030-4018(72)90243-X [retrieved on 1972-09-01]
• XIN YUAN ET AL: "Low-Cost Compressive Sensing for Color Video and Depth", ARXIV.ORG, CORNELL UNIVERSITY LIBRARY, 201 OLIN LIBRARY CORNELL UNIVERSITY ITHACA, NY 14853, 27 February 2014 (2014-02-27), XP080007981, DOI: 10.1109/CVPR.2014.424

**Description**

**Cross Reference to Related Applications**

This application claims the benefit of U.S. Provisional Application Serial Number 62/011,129, filed June 12, 2014, entitled "Systems and Methods for Image Translation for Computational Imaging," (Attorney Docket DU4366PROV), which is incorporated by reference. If there are any contradictions or inconsistencies in language between this application and one or more of the cases that have been incorporated by reference that might affect the interpretation of the claims in this case, the claims in this case should be interpreted to be consistent with the language in this case.

**Field of the Invention**

The present invention relates to computational imaging in general, and, more particularly, to forming digital images having improved quality, such as three-dimensional images and extended depth-of-field images.

**Background of the Invention**

A camera is an optical instrument in which a lens system captures light from a scene and forms an optical image at its focal plane. The optical image manifests as an illumination pattern formed on a recording medium, such as photographic film or an array of sensor elements (*i.e.*, a "focal-plane array"), which is typically located at or near the focal plane of the lens system. For a photographic-film-based camera, the captured image is proportional to the illumination pattern and is permanently imprinted on the film. A digital camera, however, estimates an image of the scene using digital processing of the illumination pattern as recorded by the sensor elements of its focal-plane array. In conventional practice, the digital processing also provides noise reduction, as well as correction of non-uniformity and distortion. Despite the advances of digital processing, the idea that a captured image has a one-to-one correspondence to (*i.e.*, is isomorphic to) and proportional to the illumination pattern at the moment of capture persists in current camera design.

The purpose of a camera is to create an image of a real-world scene (also referred to as a real-world object). Real-world scenes are five-dimensional (5D) distributions that include three spatial dimensions, time, and color. A conventional camera collapses these distributions to two dimensions in space, with interlaced or layered sampling of color and sequential sampling of time. As a result, a great deal of information about the real-world scene is not recovered by the recording medium, thereby degrading spatial and longitudinal resolution and limiting the depth-of-field (DOF) of the resultant image.

Computational imaging offers a hope for recovering much of the heretofore unrecovered information, however, thereby improving the capabilities of a camera in ways that are not possible with film-based imaging systems. In contrast to standard imaging approaches, computational imaging does not presume isomorphism between the physical structure of a scene and its reconstructed image. Instead, in the design of computation imaging systems, physical measurements are "coded" to enable computational "decoding" during image reconstruction and, thereby, an improvement in metrics in the reconstructed image. Computational imaging has been used to develop in-camera computation of digital panoramas and high-dynamic-range images, as well as light-field cameras, which enable generation of three-dimensional images, enhanced of depth-of-field (EDOF), and selective re-focusing (or "post focus").

Several approaches for improving image reconstruction using computational imaging have been developed in the prior art, including inter-pixel interpolation and coded-aperture imaging systems.

Interpolation can be used to improve the visual quality of a reconstructed image by "filling in" the regions that lie between the sensor elements of a focal-plane array. Under best practice, nonlinear estimation algorithms accounting for the values in all color layers are used to complete the two-dimensional spatial and one-dimensional color data cube from the joint set of color-plane measurements. These sampling strategies assume, however, that the measurement is isomorphic to the scene image. Unfortunately, this conventional strategy does not account for the three-dimensional spatial structure of the object space of the scene. In other words, depth information in the scene is not recovered.

Coded-aperture imaging "structures" the optical response of an optical system (*i.e.*, its impulse response, or "point-spread function (PSF)," $h(x,x',y,y',\lambda,t)$) and then reimages its generated light distribution onto a focal-plane array. It should be noted that coded-aperture-based sampling is an example of computational imaging because: (1) the PSF of the optical system is coded such that measured data is not isomorphic to the scene data cube (the data cube must be estimated from digital processing); and (2) because prior information (such as sparsity or smoothness) is applied to allow decompressive estimation of the scene. Computational imaging requires both (1) and (2) for the construction of an accurate forward model corresponding to $h(x,x',y,y',\lambda,t)$ and the construction of an accurate object model corresponding to the priors used to regularize inversion.

Yet another computational imaging approach relies on the combination of a coded aperture with spectral dis-

person, which enables high-resolution reconstruction of the spatio-spectral subspace of the datacube, as disclosed by Wagadarikar, et al., in "Single disperser design for coded aperture snapshot spectral imaging," Applied Optics, Vol. 47, pp. B44-B51 (2008). In addition, translation of a coded aperture during image acquisition adds temporal variation to the PSF of the optical system and enables the use of identical mathematical strategies to reconstruct multiple temporal frames from a single recorded frame, as discussed by Llull, et al., in "Coded aperture compressive temporal imaging." Optics Express, Vol. 21, pp. 10526-10545 (2013). Further, this strategy can be extended to volume imaging of a scene by sweeping the focus position of the lens during single-frame acquisition, as disclosed by Yuan, et al., in "Low-Cost Compressive Sensing for Color Video and Depth," in arXiv preprint arXiv: 1402.6932 (2014). Still further, the coded-aperture compression strategy is a specific example of compressive measurement strategies disclosed by Brady, et al., in U.S. Patent Nos. 7,432,843, 7,463,174, and 7,463,179.

Unfortunately, prior-art coded-aperture-imaging approaches are non-ideal because: (1) relay optics used to image the code plane onto the detector increase the complexity and volume of the optical system; and (2) accurate characterization of the forward model is challenging.

## Summary of the Invention

The present invention enables a system and method for computing a digital image of a scene such that the resultant image has enhanced spatial, temporal, and/or depth resolution without some of the costs and disadvantages of the prior art. Embodiments of the present invention are well suited to forming high-resolution images, such as three-dimensional images and/or enhanced depth-of-field images of the scene. Further, the augmented information can be recovered during a single image frame, making real-time imaging applications, such as three-dimensional video, feasible.

The present invention employs longitudinal and transverse image translation, during a single-frame exposure, to encode the transfer function of the optical system thereby improving camera sampling efficiency. This enables increased information rates in sampling and improved reconstructed image quality using computational imaging techniques. Embodiments of the present invention form a light distribution on a focal-plane array, where the light distribution is based on an optical image of the scene formed by a lens system. During the exposure period of the focal-plane array, relative longitudinal and transverse motion are simultaneously imparted between the light distribution and the focal-plane array, which encodes depth information on the blur kernel of the lens system, thereby generating an encoded digital output signal. A depth-information-enhanced digital image of the scene is computed by deconvolving the encoded digital output signal with the blur kernel of the lens system and a model of the transverse motion.

An illustrative embodiment is a camera comprising a lens system and a focal-plane array that collectively define an optical axis, as well as an actuator for imparting transverse motion on the focal-plane array. The lens system forms an optical image at a first point on the optical axis, which gives rise to a light distribution on the focal-plane array, which is located at a second point on the optical axis. Within the duration of a single exposure period of the focal-plane array: (1) the focal length of the lens system is scanned through a range of focal lengths, thereby imparting longitudinal motion on the light distribution relative to the focal-plane array; and (2) the focal-plane array is moved along a path that is transverse to the optical axis. By virtue of the scanned focal length and the transverse motion of the focal-plane array, depth information about the scene is encoded in the digital output signal of the focal-plane array to form an encoded digital output signal. This depth information is recovered by deconvolving the encoded digital output signal with a blur kernel for the lens system.

In some embodiments, relative motion between the light distribution and the focal-plane array is induced such that the motion is at least partially in a plane that is orthogonal to the optical axis. In some embodiments, the relative motion includes a curved path within the plane. In some embodiments, the relative motion includes a circular path within the plane. In some embodiments, the relative motion includes a linear path within the plane.

In some embodiments, the relative motion is induced by moving at least a portion of the lens system. In some embodiments, the relative motion is induced by moving the focal-plane array. In some embodiments, the relative motion is induced by moving both the focal-plane array and at least a portion of the lens system.

In some embodiments, relative lateral motion between the light distribution and focal-plane array is implemented using a conventional camera "optical image stabilization" system. In some embodiments, relative longitudinal motion between the light distribution and the focal-plane array is implemented via the conventional camera focus adjustment. In some embodiments, relative longitudinal motion between the light distribution and the focal-plane array is implemented by physically moving the focal-plane array along the optical axis of the lens system. In some embodiments, relative longitudinal motion between the light distribution and the focal-plane array is implemented by physically moving at least a portion of the lens system relative to the focal-plane array along the optical axis of the lens system.

In some embodiments, the depth-information-enhanced digital image of the scene is computed by deconvolving the encoded digital output signal with a calibrated multi-dimensional impulse response of the lens system.

In some embodiments, a digital image of a scene is estimated using more pixels in the four-dimensional transverse space, longitudinal space and temporal data cube than the number of sensor pixels included in the focal-plane array.

An embodiment of the present invention is a method for forming a digital image of a scene, the method comprising: forming an optical image at a first position on a first axis; locating a focal-plane array at a second position on the first axis, wherein the first position and second position are separated along the first axis by a first distance; receiving a light distribution at the focal-plane array, the light distribution being based on the optical image and the first distance; converting the light distribution into a digital output signal over a first exposure period; controlling at least one of the first position and the second position to scan the first distance through a first range during the first exposure period; and inducing a first relative motion between the focal-plane array and the light distribution during the first exposure period, wherein the first relative motion is unaligned with the first axis; wherein the scanning of the first distance through the first range and the first relative motion collectively encode the digital output signal to form an encoded digital output signal.

**Brief Description of the Drawings**

FIG. 1 depicts a schematic drawing of a computational imaging system in accordance with an illustrative embodiment of the present invention.

FIG. 2 depicts operations of a method for generating a digital image of a scene in accordance with the illustrative embodiment of the present invention.

FIG. 3 depicts a plot of the focus of lens **102** over a series of representative exposure frames in accordance with the illustrative embodiment.

FIG. 4 depicts a schematic drawing showing that the support of $\hat{h}(u)\widehat{p_x}(u)\widehat{p_t}(v)$ in the Fourier (u,v) plane defines the "passband" of the measurement system in accordance with the present invention.

FIG. 5 depicts a simulated PSF for a camera having a stationary focal-plane array.

FIGS. 6A-B depict simulated PSFs for two points in the object space of camera **100,** wherein the PSFs are obtained while focal-plane array **104** is moved linearly in a transverse direction during an exposure frame in accordance with the present invention.

FIG. 7 depicts the simulated PSF for camera **100** at different ranges in accordance with the illustrative embodiment of the present invention.

FIG. 8 depicts four different well-known simulation images provided as an in-focus simulated object.

FIG. 9 depicts an arrangement of camera **100** and objects **800, 802, 804,** and **806,** wherein the four objects are located at different distance along the z-axis of the camera.

FIG. 10A depicts reconstructed images **800, 802, 804,** and **806** where one focus position is used.

FIG. 10B depicts the reconstructed images, where each is deconvolved with its perpetrating kernel.

FIG. 11 depicts plots of the conventional blur kernels for the reconstructed images depicted in plot **1002.**

FIG. 12 depicts plots of EDOF kernels taken with induced longitudinal motion between light distribution LD(x) and focal-plane array **104** *(i.e.,* with a focal sweep of lens **102)** but without transverse motion of the focal-plane array.

FIG. 13 depicts plots of the cross-sections of the EDOF kernels shown in FIG. 12. The cross-sections shown in FIG. 13 illustrate that these focal-sweep kernels are substantially depth invariant.

FIG. 14A depicts reconstructed images **800, 802, 804,** and **806** as corrupted by the EDOF kernels taken with induced longitudinal motion but without transverse motion of focal-plane array **104.**

FIG. 14B depicts the reconstructed images shown in plot **1400.** Each image in plot **1402** is deconvolved with its perpetrating kernel.

FIG. 15 depicts plots of the peak signal-to-noise values for images **800, 802, 804,** and **806** after deconvolution.

FIG. 16 depicts plots of EDOF kernels taken with induced longitudinal and linear transverse motion. FIG. 16 shows the kernel for the target object distances with v= 10 pixels/$\Delta_t$.

FIG. 17A depicts reconstructed images **800, 802, 804,** and **806** as corrupted by the EDOF kernels taken with induced longitudinal motion between light distribution LD(x) and focal-plane array **104** and transverse motion of the focal-plane array in one dimension.

FIG. 17B depicts the reconstructed images shown in plot **1700.** Each image in plot **1702** is deconvolved with its perpetrating kernel.

FIG. 18 depicts plots of the peak signal-to-noise values for images **800, 802, 804,** and **806** after deconvolution as depicted in plot **1702.**

FIG. 19 depicts plots of blur kernels taken with induced longitudinal motion between light distribution LD(x) and focal-plane array **104** and transverse motion of the focal-plane array in two dimensions.

FIG. 20A depicts reconstructed images **800, 802, 804,** and **806** as corrupted by the EDOF kernels taken with induced longitudinal motion between light distribution LD(x) and focal-plane array **104** and transverse motion of the focal-plane array in two dimensions.

FIG. 20B depicts the reconstructed images shown in plot **2000.** Each image in plot **2002** is deconvolved with its corresponding blur kernel.

FIG. 21 depicts plots of the peak signal-to-noise values for images **800, 802, 804,** and **806** after deconvolution as depicted in plot **2002.**

## Detailed Description

Embodiments of the present invention employ image translation as a coding mechanism to improve the quality of a reconstructed image in computational imaging systems. Specifically, the image translation includes simultaneous relative lateral and longitudinal motion between a focal-plane array of the imaging system and a physical light distribution provided to it by the optics of the imaging system during each exposure frame of the imaging system.

Computational imaging relies on a model for the physical image capture process, wherein the image, $g(x,y,z,t)$ (where $x$, $y$, and $z$ are spatial coordinates in the image space of lens **102**) is a function of the physical measurements $f(x',y',z',\lambda,t)$ of the scene being imaged (where $x'$, $y'$, and $z'$ are spatial coordinates in the object space of lens **102**), as influenced by the optical characteristics of the imaging system - specifically, its PSF, $h(x,x',y,y',z,z',\lambda)$. Actual measurements in a modern digital imaging system consist of discrete samples of $g(x,y,t)$ with an appropriate sampling structure. Also, focal imaging systems are typically "shift invariant" such that the optical system's impulse response depends only on the separation between the object-space and image-space spatial variables.

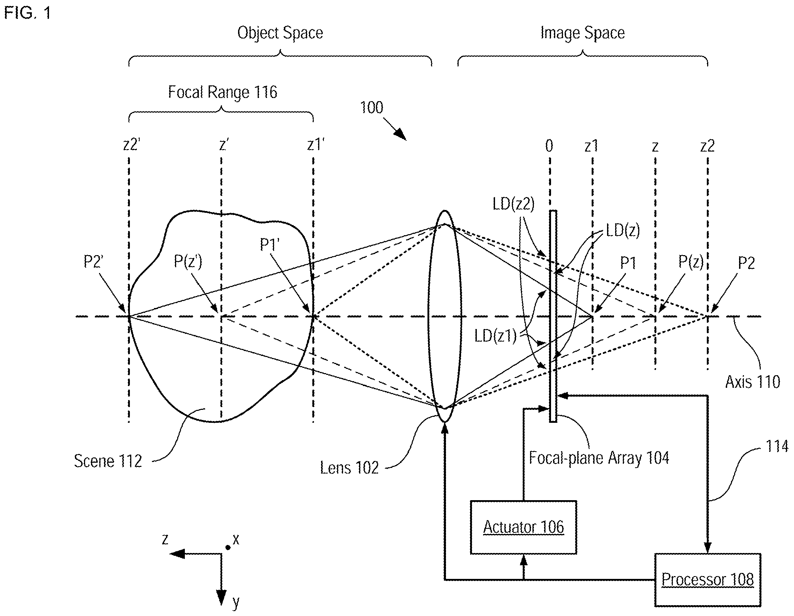

FIG. 1 depicts a schematic drawing of a computational imaging system in accordance with an illustrative embodiment of the present invention. Camera **100** is a digital camera for forming an extended depth-of-field digital image of scene **112**. Camera **100** includes lens **102**, focal-plane array **104**, motion system **106**, and processor **108**. Lens **102** and focal-plane array **104** are arranged to collectively define optical axis **110**. In some embodiments, camera **100** is dimensioned and arranged to provide digital images of scene **112** that:

i. have improved spatial resolution; or

ii. have improved temporal resolution; or

iii. have enhanced depth-of-field; or

iv. are substantially three-dimensional images; or

v. any combination of i, ii, ii, and iv.

Lens **102** is a conventional camera lens system, such as a lens system suitable for use in a hand-held digital camera. Lens **102** has variable focus and can be focused anywhere within a focal range from **z1** to **z2** (*i.e.,* focal range **116).** In the depicted example, ranges **z1** and **z2** coincide with the depth extremes of scene **112.** One skilled in the art will recognize how to specify, make, and use lens system **102.** Typically, lens **102** comprises a plurality of lens elements, where at least one of the lens elements is independently movable along optical axis **110** with respect to other lens elements to enable focus control.

Defining the measurement plane of camera **100** (*i.e.,* the surface of focal-plane array **104**) as *z*=0, mathematically, the mapping between scene **112** and the image formed by lens **102** can be described by:

$$g(x, y, t) = \int f(x', y', z', \lambda, t) h(x, x', y, y', z', \lambda) dx' dy' dz d\lambda . \qquad (1)$$

Neglecting non-uniform optical aberration, the object-measurement mapping can be considered shift-invariant within a single color band (*i.e.,* for any single color). As a result, equation (1) above takes the form:

$$g_i(x, y, t) = \int f(x', y', z', \lambda, t) h_i(x - x', y - y', -z', \lambda) dx' dy' dz d\lambda , \qquad (2)$$

where $h_i(x,y,z,\lambda)$ combines the optical PSF and the $i^{th}$ color filter response function. Note that each color plane can be considered as an independent image sampled only at pixels for which that particular color filter is active.

In the depicted example, lens **102** forms an optical image of all points (*x',y',z'*) in the object space of the lens at points (*x,y,z*) in the image space of the lens, which gives rise to light distribution **LD(z)** on focal-plane array **104.** As discussed below, the configuration of the light distribution on the focal-plane array depends on where in the image space of lens **102** the scene is formed, relative to the focal-plane array, which depends on the range, **z,** at which the lens is focused in its object space.

Focal-plane array **104** is a conventional two-dimensional array of sensor elements, each of which is operative for receiving a portion of light distribution **LD(z)** and providing a corresponding electrical signal having a magnitude based on the intensity of the light portion incident upon it. Sensor elements suitable for use in embodiments of the present invention include charge-coupled devices (CCDs), photodetectors, photodiodes, phototransistors, and the like.

Focal-plane array **104** provides output signal **114** to processor **108,** where output signal **114** is representative of the light distribution incident on its array of sensor elements. One skilled in the art will recognize that a focal-plane array is typically characterized by an **"exposure period,"** which, for the purposes of this Specification, including the appended claims, is defined as the time required for a focal-plane array to convert a light distribution incident upon it into an output signal representative of that light distribution. Normally, the duration of each exposure frame of camera **100** is equal to this exposure period, which determines the frame rate of the camera.

Actuator **106** is a conventional mechanical translation device that is operatively coupled with focal-plane array **104** such that the actuator can move the focal-plane array along a path that is at least partially unaligned with optical axis **110.** For the purposes of this Specification, including the appended claims, **"unaligned"** with optical axis **110** is defined as being neither co-linear nor parallel to the optical axis. In other words, actuator **106** moves focal-plane array along a path having at least a portion that forms an angle having a magnitude between 0° and 180° with optical axis **110.** Preferably, actuator **106** moves focal-plane array along a path having at least a portion that lies in a plane that is substantially orthogonal to optical axis **110** (*e.g.,* the x-y plane located at z=0). In the illustrative embodiment, actuator **106** is a conventional optical-image-stabilization system, such as those routinely included in hand-held digital cameras. In some embodiments, actuator **106** is another actuator operative for imparting a motion on focal-plane array **104,** wherein the motion includes a path that is in a direction transverse to optical axis **110.** In some embodiments, actuator **106** is operative coupled to lens **102** such that it imparts a motion on the lens that gives rise to a transverse motion of the light distribution incident on focal-plane array **104.**

In some embodiments, actuator **106** is a passive system that enables transverse relative motion between the light distribution on focal-plane array **104** and the focal-plane array in response to an externally applied motion. For the purposes of this Specification, including the appended claims, **"externally applied motion"** is defined as an external force applied to camera **100,** such as motion of a hand that is holding the camera, *etc.*

Processor **108** is a conventional computer processing system that is operative for performing image processing and deconvolution of output signal **114** to generate a digital image of scene **112.** Processor **108** also provides control signals to lens **102,** focal-plane array **104,** and actuator **106** to control the relative motion between the light distribution and the focal-plane array, as well as synchronize the relative motion with the exposure period of the focal-plane array (*i.e.,* its frame rate).

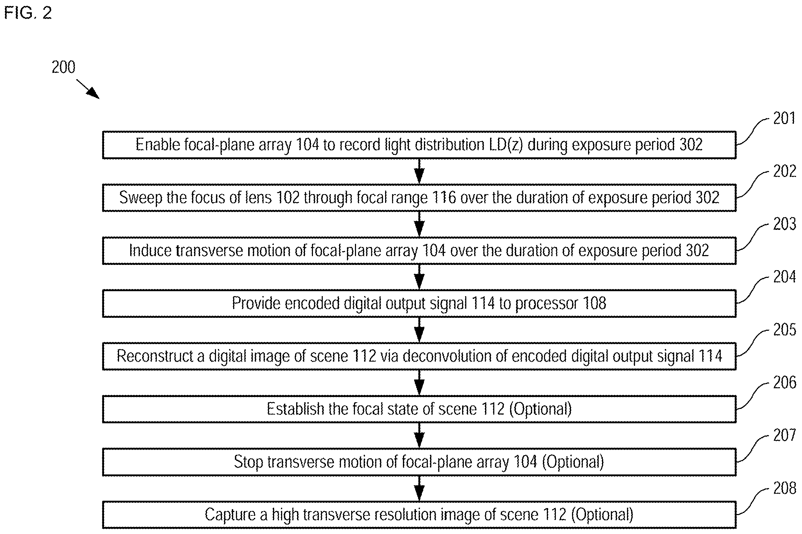

FIG. 2 depicts operations of a method for generating a digital image of a scene in accordance with the illustrative embodiment of the present invention. Method **200** begins with operation **201,** wherein, for an exposure period from time period from t=0 to time t=T, focal-plane array **104** is enabled to record light distribution **LD(z).**

At operation **202,** the focus of lens **102** is swept through focal range **116** over the duration of exposure period **302**. In operation **202,** the focus of lens **102** is swept, at a constant rate, from **z1'** to **z2'**. As a result, the position on the optical axis at which the optical image of the scene is formed (and, therefore the distance between it and focal-plane array **104)** is swept from **P1** to **P2**. As mentioned briefly above, by scanning the separation between the optical image and the focal plane array through a range of values, the light distribution incident on the focal-plane array is continuously changed as well. For the purposes of this Specification, including the appended claims, this is defined as imparting a longitudinal motion on light distribution **LD(z)** relative to focal-plane array **104**. In some embodiments, this relative longitudinal motion is achieved by keeping the focus of lens **102** constant and physically moving focal-plane array **104** along optical axis **110.**

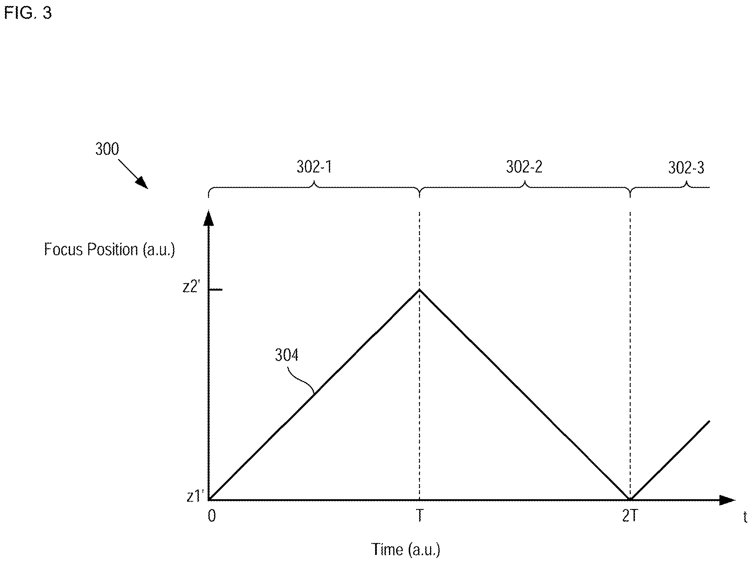

FIG. 3 depicts a plot of the focus of lens **102** over a series of representative exposure frames in accordance with the illustrative embodiment. Plot **300** depicts the focal position **304** of lens **102** over three exposure frames **302,** each having an exposure period of T. For illustrative purposes, in the depicted example, an exposure frame of camera **100** is equal to the exposure period of focal-plane array **104;** however, one skilled in the art will recognize that the exposure frame of the camera can be different than the exposure period of the focal-plane array without departing from the scope of the present invention.

One skilled in the art will recognize that, when lens **102** is focused at range **z=z1',** the region of scene **112** located at plane **z1'** is focused at plane **z1** *(i.e.,* position **P1'** is focused at position **P1).** This gives rise to light distribution **LD(z1)** on focal-plane array **104**. In similar fashion, when lens **102** is focused at range **z=z2',** the region of scene **112** located at plane **z2'** is focused at plane **z2** *(i.e.,* position **P2'** is focused at position **P2).** This gives rise to light distribution **LD(z2)** on the focal-plane array. As the focus of lens **102** scans between **z1'** and **z2',** the point on optical axis **110** at which the optical image of scene **112** is formed moves between **P1** and **P2,** and the light distribution on the focal-plane array, **LD(z),** smoothly transitions from **LD(z1)** to **LD(z2)** over the course of the exposure frame.

In the illustrative embodiment, the relative longitudinal motion between light distribution **LD(z)** and focal-plane array **104** is attained by sweeping the focus of lens **102** from **z1'** to **z2'** during exposure period **302-1,** sweeping it back from **z2'** to **z2'** during exposure period **302-2,** and so on. This mitigates delays between exposure frames due to the need to return the focus of lens **102** back to the same position after every exposure frame. One skilled in the art will recognize, after reading this Specification, however, that myriad alternative focus sweeping strategies exist within the scope of the present invention.

At operation **203,** a relative transverse motion between light distribution **LD(z)** and focal-plane array **104** is induced over the duration of each exposure period **302**. In the depicted example, actuator **106** moves focal-plane array **104** in a 360° circular path in the x-y plane located at z=0. Preferably, the path of focal-plane array results in a translation amplitude of the light pattern that is several times larger than the focal-spot waist.

One skilled in the art will recognize that, by virtue of the relative longitudinal and transverse motions between light distribution **LD(z)** and focal-plane array **104,** the information recorded by the focal-plane array during each exposure period **302** is a fusion of an infinite number of slices of images within focal range **116** *(i.e.,* an integration of **LD(z)** over a time period equal to T). Knowledge of the PSF of lens **102** and the path of focal-plane array **104** enables recovery of spatial information for scene **112** via deconvolution, as discussed below.

*The Forward Model for Computational Imaging With Motion-Encoding*

A forward model of camera **100** can provide insight into how image translation and focal sweep during a single exposure period of focal-plane array **104** improve the sampling efficiency for a computation imaging system. Since independent consideration of each color plane is sufficiently representative, a monochromatic forward model of the camera is sufficient and is described by:

$$g(x, y, t) = \int f(x', y', z, t) h(x - x' - \eta(t), y - y' - \xi(t), \zeta(t) - z) dx' dy' dz , \qquad (3)$$

where $\eta$, $\xi$, and $\zeta$ are time-dependent spatial translations in x, y, and z, respectively.

It should be noted that elimination of such translations is normally a key goal of prior-art imaging systems because they give rise to motion blur, image jitter and defocus. It is an aspect of the present invention, however, that these relative motions can be exploited to enable physical-layer data compression, increase the rate of information acquisition, and improve estimated image quality.

One skilled in the art will recognize that spatial resolution is limited by wave diffraction, geometric aberration and pixel sampling. In contrast, temporal resolution is limited only by the pixel-sampling rate of focal-plane array **104**. Wave diffraction and geometric aberration limits are determined by the structure of the PSF of lens **102**. Pixel-sampling limits in space and time are determined by the pixel-sampling functions $p_x(x)$ and $p_t(t)$, as discussed by Brady, et al., in "Optical imaging and spectroscopy," John Wiley & Sons, (2009). The sampled measurement data cube consists of discrete samples of the continuous function:

$$g(x, y, t) = \int f(x'', y'', z, t) h(x' - x'' - \eta(t'), y' - y'' - \xi(t'), \zeta(t') - z) p_x(x - x') p_x(y - y') p_t(t - t') dx'' dy'' dx' dy' dz dt' \ . \qquad (4)$$

The impact of translation on this measurement model can be readily understood by considering a two-dimensional space-time model under which a one-dimensional spatial image is translated as a function of time, such as:

$$g(x, t) = \int f(x'', t') h(x' - x'' - vt') p_x(x - x') p_t(t - t') dx'' dx' dt', \qquad (5)$$

where linear motion of the image is assumed as u, during data capture. The Fourier transform of $g(x,t)$ in space and time is given by:

$$\hat{g}(u, v) = \hat{f}(u, vu + v) \hat{h}(u) \widehat{p_x}(u) \hat{p}_t(v) \ . \qquad (6)$$

The support of $\hat{h}(u) \widehat{p_x}(u) \hat{p}_t(v)$ in the Fourier (u,v) plane defines the "passband" of the measurement system.

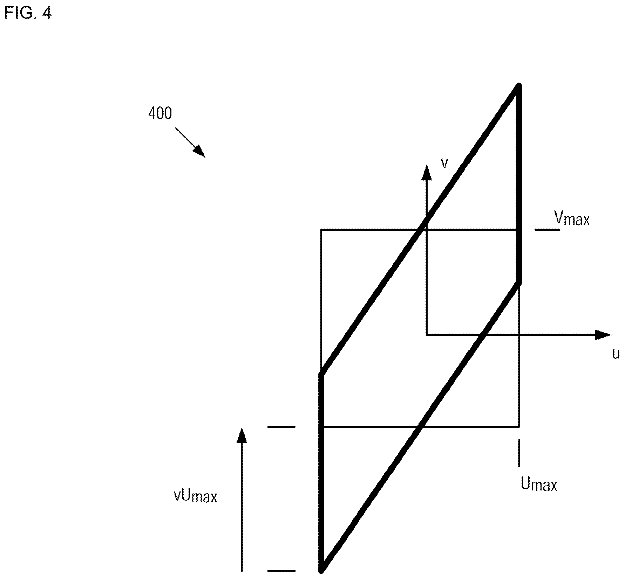

FIG. 4 depicts a schematic drawing showing that the support of $\hat{h}(u) \widehat{p_x}(u) \hat{p}_t(v)$ in the Fourier (u,v) plane defines the "passband" of the measurement system in accordance with the present invention. Plot **400** evinces that the effect of image translation is to shift the region in the Fourier space of $\hat{f}(u,v)$ that passes through the passband to be characterized in the measurement. Assuming a rectangular passband, the square in the figure with extent $U_{max}$ along the u-axis and extent $V_{max}$ along the v-axis is the passband through which measurements are obtained. With no image translation, this is also the passband through which object data is obtained. Motion transforms the object mapping, however, such that the dark parallelogram is represents the passband in the object Fourier space. The effect of this change in the passband is to make the image sensitive to higher frequency (*e.g.*, faster) components than would be normally observed at the cost of reducing the extent of the passband along the u-axis at a fixed frequency. Specifically, the extent of the passband at v=0 is now $2V_{max}/v < 2U_{max}$. If the velocity is $N$ pixels/frame, the spatial passband at a given frequency is reduced by at least a factor of $N$. The total area of the passband in the object space is the same as the area in sample space, $4U_{max}V_{max}$ - independent of the image velocity.

The effect of image translation during recording is, therefore, a shear in the effective sampling passband. If information is uniformly distributed over the object Fourier space, such a shift has no effect on the overall information rate. In practice, however, information in natural images tends to be clustered at low spatial and temporal frequencies. In such cases, image translation blurs the recorded image and reduces the overall information rate. In many cases, however, the low frequency information is well characterized or highly compressible and one does find the potential of sensor translation to increase the maximum frequency response attractive. Translation may be particularly attractive overcoming aliasing limits associated with subsampling due to interlaced color filtering, as illustrated by Kittle, et al., in "Multi-frame image estimation for coded aperture snapshot spectral imagers." Applied Optics, Vol. 49, pp. 6824-6833 (2010). In similar fashion, translation of codes, or of the image plane, overcomes aliasing limits to achieve spatial super-resolution.

The multi-dimensional nature of the image, allowing image motion in both the x- and y-planes, is particularly significant in this respect because motion over approximately 10 pixels per frame in a curved path achieves a net increase in temporal frequency resolution by a factor of 10, while reducing lateral resolution in each direction by $\sqrt{10}$. The increase in reshaping of the bandpass and the increase in temporal resolution associated with image translation can be understood in various ways. Most obviously, if an object in a scene happens to be moving as a function of time, then better focus and better imaging is obtained if the image moves in the same direction. More subtly, if a spatially stationary object changes as a function of time, its temporal evolution can be mapped onto a spatial pattern by image motion. For example, if an object is described as $f(x,t) = \delta(x)f_t(t)$, and we assume that $h(x) = \delta(x)$, then the sensed data with image translation is given by:

$$g(x, t) = \int f_t(t') p_x(x - vt') p_t(t - t') dt', \qquad (7)$$

Approximating the transverse spatial sampling as $p_x(x) = \delta(x)$, then:

$$g(x,t) = f(x/v)p(t - x/v')dt' \qquad (8)$$

which means that the motion maps the temporal signal ft(t) onto a spatial pattern that can be analyzed with effective bandpass $2(V_{max} + vU_{max})$.

*Three-Dimensional Imaging*

The addition of image translation during exposure provides particular advantage in the case of a scene having a large depth-of-field, or when the object range of the scene is unknown. In such situations, the initial PSF is blurred by defocus and the impact of motion is not pronounced for defocused ranges.

In a typical conventional camera, the process of finding the correct focal state is separated from the process of image capture. Whether done manually by the camera user or via an autofocus system (using secondary range sensors or image-contrast analysis), the lens system is normally adjusted to obtain a "proper" focus prior to recording an image. Such an approach is sub-optimal for recording a scene in which the object range is dynamic or where the scene spans multiple ranges, however. As a result, numerous alternative strategies for obtaining extended depth-of-field and/or digital refocus have been developed, such as "wavefront coding" strategies and "light-field" strategies. In wavefront coding, aberrations or "codes" are deliberately introduced into the lens aperture to give rise to focal-invariant or coded PSFs. In light field strategies, microlens arrays are used to interlace multiple range sampling. Unfortunately, these strategies reduce lateral resolution to obtain improved imaging over range.

It is an aspect of the present invention, however, that moving an image during focal sweep affords the same advantages as wavefront coding and light field imaging, but without some of their disadvantages. The combination of image motion and focal sweep can produce a range invariant or range coded PSF that is comparable to that obtained using these prior art approaches. In contrast to wavefront coding and light field imaging, however, motion coding can be used adaptively. For example, once motion has been applied to analyze the focal state or to capture an extended depth of field image, it may be turned off or reduced to allow high transverse-resolution image capture.

The simplest way to use image translation to encode range and focal state is to simultaneously translate the image longitudinally and laterally, as in operations **202** and **203,** respectively. The model for such an approach is:

$$g(x,y,t) = \int f(x'',y'',z,t)h(x' - x'' - vt', y - y'', \alpha t' - z)p_x(x - x')p_x(y - y')p_t(t - t')dx''dy''dx'dy'dzdt', \qquad (9)$$

where $v$ and $\alpha$ are transverse and focal-longitude translation velocities. It can be shown that images captured under this model enable single-frame extended-depth-of-field imaging comparable to wavefront coding and light-field imaging. Assuming that transverse resolution is dominated by the optical PSF and that temporal sampling involves measurement over a single time step, the recorded image is given by:

$$g(x,y) = \int \int \int \int_0^T f(x',y',z)h(x - x' - vt, y - y', \alpha t - z)dx'dy'dzdt , \qquad (10)$$

where the scene is assumed to be static over the capture time frame (i.e., an exposure frame). Integrating Eq. 10 over time enables a definition of the spatial PSF as:

$$h_r(x,y,z) = \int_0^T h(x - vt, y, \alpha t - z)dt. \qquad (11)$$

By approximating the three-dimensional-imaging impulse response of lens **102** by a Gaussian mode, the system impulse response *(i.e.,* PSF) can be modeled for transverse velocity, $v$.

As discussed above and with respect to operation **203,** in the illustrative embodiment, actuator **106** moves focal-plane array **104** in a 360° circular path in the x-y plane located at z=0. Specifically, relative to the image formed by lens **102**, focal-plane array **104** is moved in a circular motion by setting the x-axis position as $\eta(t) = a\cos(\omega t)$ and the y-axis position as $\xi(t) = a\sin(\omega t)$.

It is an aspect of the present invention that by translating the image formed by lens **102** in both the x- and y-direction during a focal sweep of the lens, three-dimensional information about scene **112** can be reconstructed by either blind or model-based deconvolution.

In order to demonstrate the advantages afforded by the present invention, it is instructive to consider the PSF for different transverse velocities, $v$.

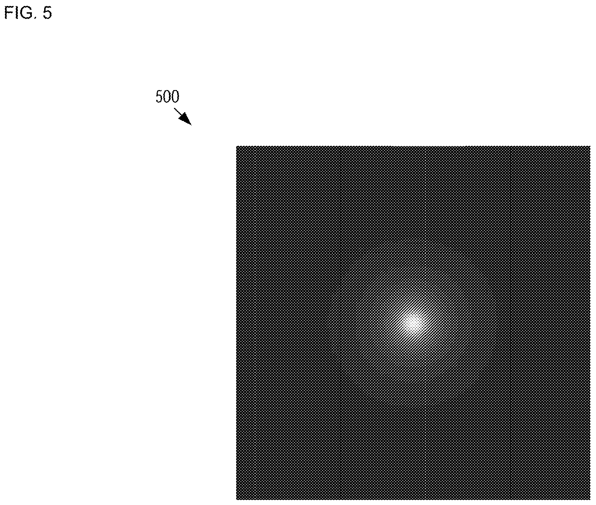

FIG. 5 depicts a simulated PSF for a camera having a stationary focal-plane array. Plot **500** shows a simulated PSF for camera **100** for a transverse velocity, $v$, of zero. Plot **500** evinces that, in the absence of transverse motion, the PSF is a circularly symmetric blur associated a circular focal sweep.

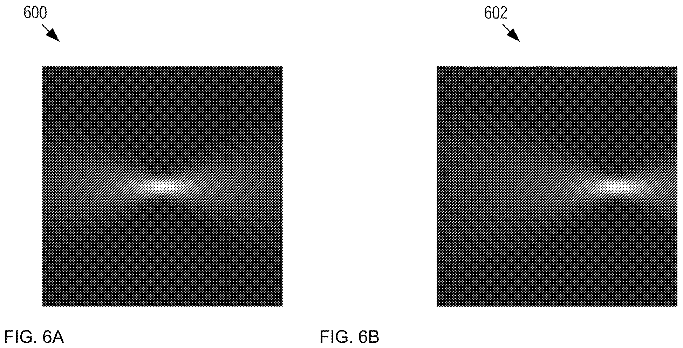

FIGS. 6A-B depict simulated PSFs for two *(x,y)* points in the object space of camera **100**, wherein the PSFs are obtained while focal-plane array **104** is moved linearly in a transverse direction during an exposure frame in accordance with the present invention.

Plot **600** shows a PSF for a first object point in scene **112**. In contrast to what is shown in plot **500**, when a relative motion between the image formed by lens **102** and focal-plane **104** is induced, the longitudinal structure of the three-dimensional PSF is laid out in a transverse-time-integrated PSF.

As with wavefront coding and other methods for obtaining extended-depth-of-field images, image translation during focal sweep, in accordance with the present invention, enables formation of a coded PSF that can be computationally deconvolved to recover a 3D or all-in-focus image.

Plot **602** depicts a PSF for a second object point having a different range and transverse point from optical axis **110** than the first object point, where focal-plane array **104** is moved linearly in a transverse direction in accordance with the present invention.

Each object point in scene **112** induces the PSF at its corresponding range and transverse point. It can be seen from plots **600** and **602** that during the focal sweep in an exposure frame, the PSF is shifted to appear at a point corresponding to its range.

It should be noted, however, that while one can analyze this shift to find the range, there is ambiguity between the transverse position of the object point and the range. This ambiguity can be removed by translating the image in two dimensions during the focal sweep, as described above and with respect to operation **203**. As a result, while a relative transverse motion between the light distribution and focal-plane array that is linear is within the scope of the present invention, a relative motion that has a path in two transverse dimensions is preferred. It should be further noted that the relative motion induced between the light distribution and the focal-plane array does not need to be restricted to a plane that is orthogonal to optical axis **110** as long as the motion includes at least a portion that can be projected onto such a plane.

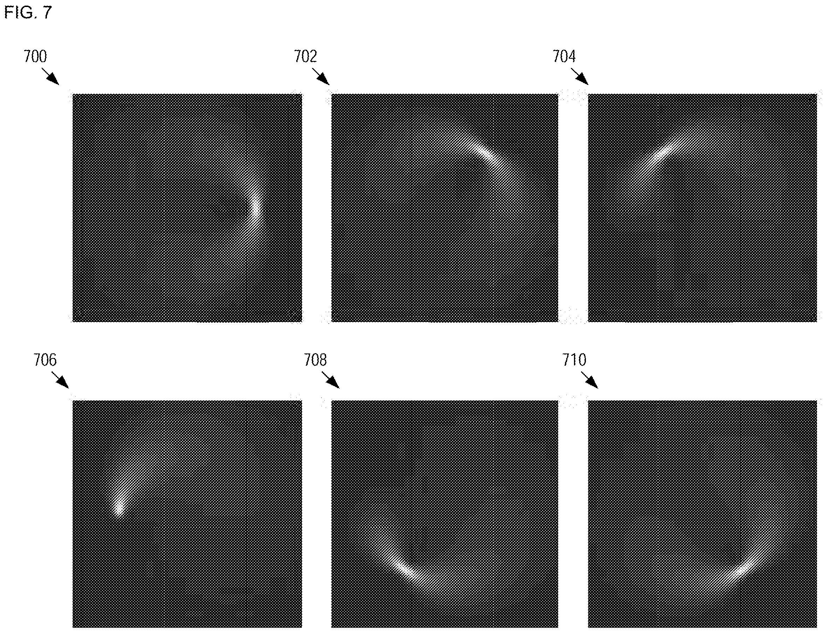

FIG. 7 depicts the simulated PSF for camera **100** at different ranges in accordance with the illustrative embodiment of the present invention. For the circular motion of focal-plane array **104** induced in operation **203**, with translation amplitude approximately six-times larger than the focal-spot waist, plots **700, 702, 704, 706, 708**, and **710** depict the observed PSFs for the imaging system at six different values of z in the object space of lens **102**.

It can be seen from plots **700, 702, 704, 706, 708**, and **710** that each object point induces the PSF at its corresponding range and transverse point. During a focal sweep, the PSF is shifted to appear at a point corresponding to its range, which affords embodiments of the present invention with significant advantages over prior-art imaging methods.

For a rotation rate of 360° over one focal sweep, the angle at which the maximum in the PSF occurs uniquely indicates the range of an object point. Analysis of the PSF makes it possible to find the PSF and then estimate the range by finding the angle to the PSF peak. Examples of such an approach are described by Joshi, et al., in "PSF estimation using sharp edge prediction," Computer Vision and Pattern Recognition, Proceedings of the 2008 IEEE Conference on Computer Vision and Pattern Recognition 2008, June 23-28, 2008, pp. 1-8.

Returning now to method **200**, at the end of operation **203**, focal-plane array **104** has recorded a composite image of scene **112** that is a fusion of an infinite slices of images integrated over the focal range of lens **112** and the path of the focal-plane array during exposure frame **302**.

At operation **204**, focal-plane array **104** provides this composite image to processor **108** as encoded digital output signal **114**.

At operation **205**, a digital image of scene **112** is reconstructed by deconvolving encoded digital output signal **114** with the PSF of camera **100** and a model for the transverse motion of focal-plane array **104**.

As mentioned above, the present invention enables the ability to employ motion coding in an adaptive fashion. This is notably in contrast to wavefront coding and light field imaging. As a result, method **200** further includes several optional operations performed after the end of exposure frame **302**.

At optional operation **206**, the focal state of scene **112** is established. In some embodiments, optional operation **206** alternatively comprises capturing an extended depth-of-field image of scene **112**.

At optional operation **207**, processor **108** controls actuator **106** to reduce the magnitude of the transverse motion of focal-plane array **104** (or, in some embodiments, stop its motion completely).

At optional operation **208**, a high transverse-resolution image of scene 112 is captured in conventional fashion.

In some embodiments, the operation **206** is performed based on the image reconstruction performed during exposure frame **302-1** and operations **207** and **208** are performed during exposure frame **302-2.**

*Three-Dimensional Imaging Examples*

In order to demonstrate the advantages afforded by the present invention, simulated image reconstructions for a scene having an extended depth-of-field are presented here for three different image-sweeping strategies.

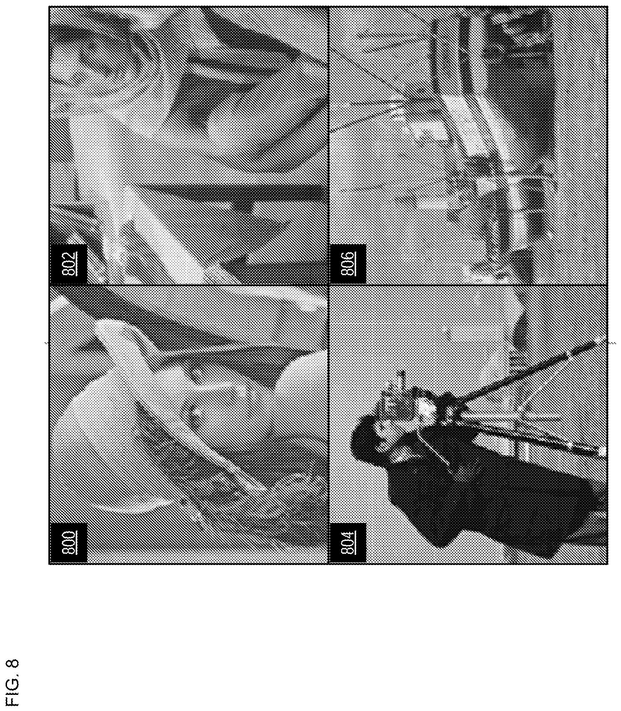

FIG. 8 depicts four different well-known simulation images provided as an in-focus simulated object.

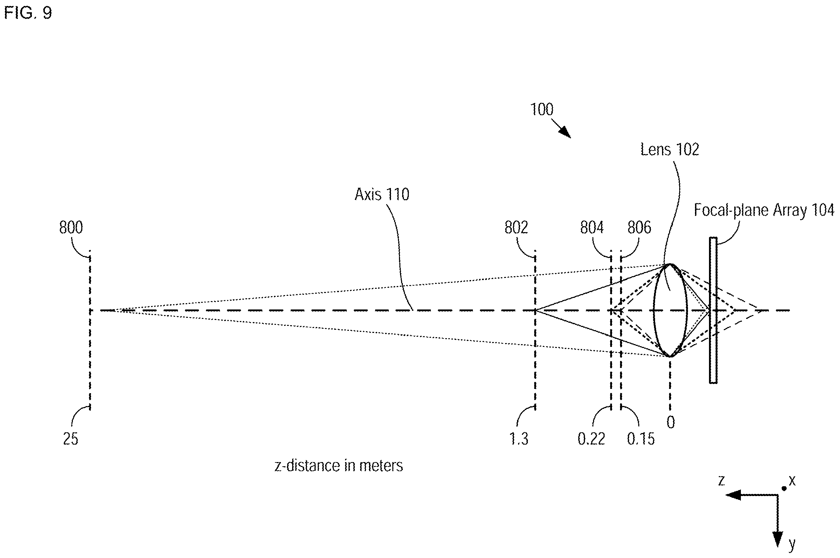

FIG. 9 depicts an arrangement of camera **100** and objects **800, 802, 804,** and **806,** wherein the four objects are located at different distance along the z-axis of the camera. Specifically, images **800, 802, 804,** and **806** are modeled at distances, z, of 25 m, 1.3 m, 0.22 m, and 0.15 m, respectively, while the focus of lens **102** is on image **802** *(i.e.,* the camera is focused at a distance of 1.3 m). The simulations of images **800, 802, 804,** and **806** are assumed as Gaussian kernels with standard deviations, $\sigma$, that vary with defocus error, since Hermite-Gaussian beams are eigenfunctions of the Fresnel-propagation transformation. The images are also approximated as Nyquist-sampled with diffraction-limited optics.

Based on the assumptions above, the defocused blur kernel, $h(x,y,z_0,z)$ for an object plane $z_0$ conjugate to an image-space distance z from camera **100** varies according to the focused beam waist, wo, and the optical defocus relative to the object plane as:

$$h(x, y, z_0, z) = \frac{1}{w_0{}^2 + \sigma^2(z_0, z)} \exp\left(-\pi \frac{(x^2 + y^2)}{w_0{}^2 + \sigma^2(z_0, z)}\right), \qquad (12)$$

where the defocus affects the blur kernel's standard deviation for a pixel pitch, $\Delta$, according to the paraxial focus error:

$$\sigma(z_0, z) = \frac{Dz}{2\Delta}\left|\frac{1}{F} - \frac{1}{z_0} - \frac{1}{z}\right|, \qquad (13)$$

and where F denotes the system focal length and D denotes the entrance pupil diameter. In the simulations, *F*=5 mm and *D*=1 mm.

Each image is simulated as being taken by camera **100,** while the camera is focused on image **802** with added white Gaussian noise.

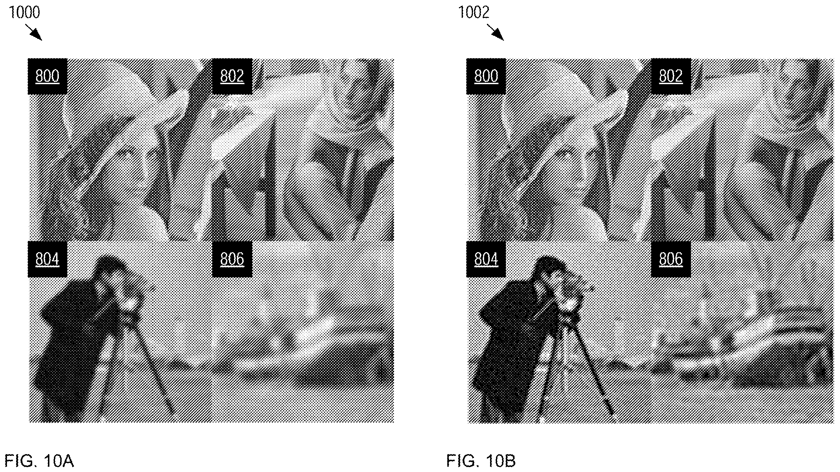

FIG. 10A depicts reconstructed images **800, 802, 804,** and **806** where one focus position is used.

FIG. 10B depicts the reconstructed images, where each is deconvolved with its perpetrating kernel.

Plots **1000** and **1002** demonstrate that the corresponding defocused impulse responses deteriorate rapidly as focal-plane array **104** becomes conjugate to distances closer than the true object distance.

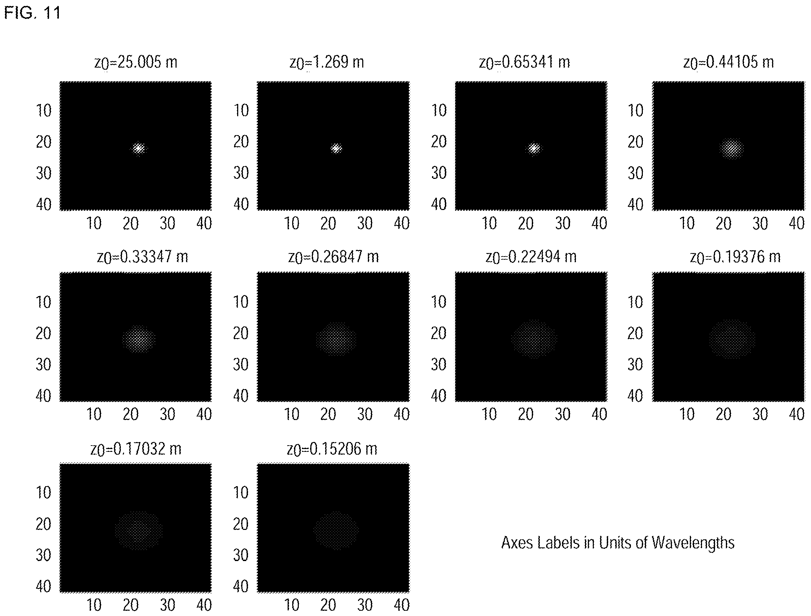

FIG. 11 depicts plots of the conventional blur kernels for the reconstructed images depicted in plot **1002.** It should be noted that the plots shown in FIG. 11 represent images taken without any relative transverse motion between the optical images and the focal plane array. The plots are shown with axes in units of wavelengths. As would be expected by one of skill in the art, the high-frequency components within the images, which are low-pass filtered by Gaussian kernels, are irrecoverable by deconvolution.

It is an aspect of the present invention, however, that high spatial and temporal frequencies can be preserved during the image formation process for objects of arbitrary distance from the camera. In accordance with the present invention, sweeping the detector a distance $\Delta_z = \alpha T$ in the image space of lens **102** during the integration period T results in the EDOF kernel:

$$h_{S,1}(x, y, z_0) = \int_0^T h(x, y, z_0, \zeta(t') - z)dz, \qquad (14)$$

where $\xi(t) = \alpha t$ and $\Delta_z$=185 microns in the following simulations *(i.e.,* the detector sweeps a distance from 5 mm to 5.185 mm behind lens **102** in the image volume; $\alpha$=0.185 mm/T). This corresponds to sweeping object distances ranging from 25 meters to 15 cm. Using ten equally-spaced (in image space) candidate range bins, of which the simulated objects **800, 802, 804,** and **806** correspond to the first, second, sixth, and tenth PSFs.

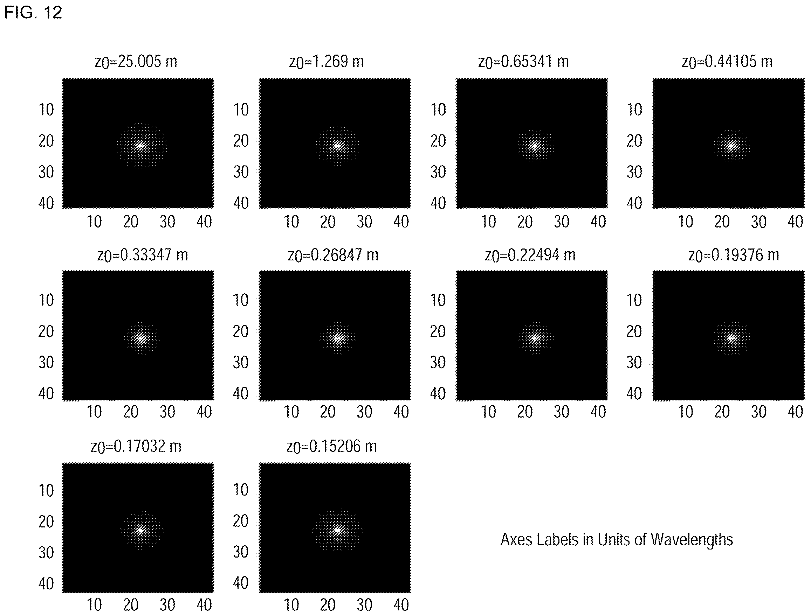

FIG. 12 depicts plots of EDOF kernels taken with induced longitudinal motion between light distribution LD(x) and focal-plane array **104** *(i.e.,* with a focal sweep of lens **102)** but without transverse motion of the focal-plane array. It should be noted that the kernels consist of summations of Gaussians.

These focal-sweep kernels have been shown to be nearly depth-invariant by Liu, et al., in "Extended depth-of-field microscopic imaging with a variable focus microscope objective," Optics Express, Vol. 19, pp. 353-362 (2011).

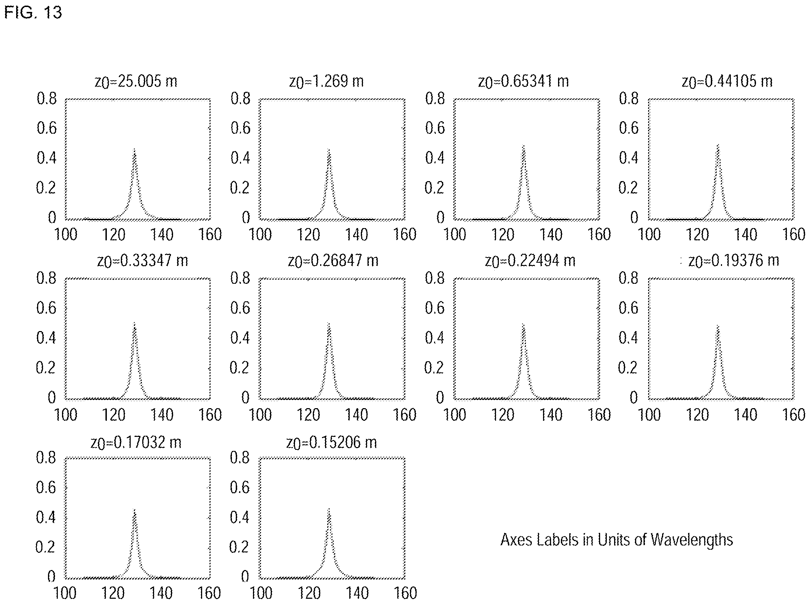

FIG. 13 depicts plots of the cross-sections of the EDOF kernels shown in FIG. 12. The cross-sections shown in FIG. 13 illustrate that these focal-sweep kernels are substantially depth invariant.

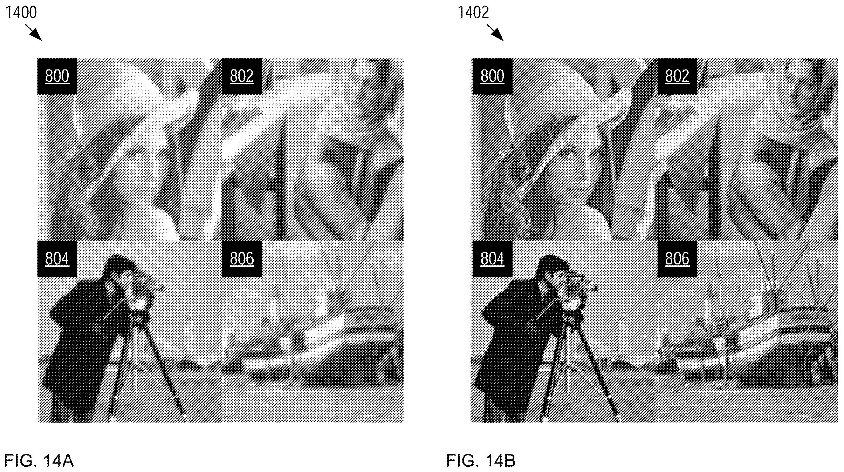

FIG. 14A depicts reconstructed images **800, 802, 804,** and **806** as corrupted by the EDOF kernels taken with induced longitudinal motion but without transverse motion of focal-plane array **104.**

FIG. 14B depicts the reconstructed images shown in plot **1400.** Each image in plot **1402** is deconvolved with its perpetrating kernel.

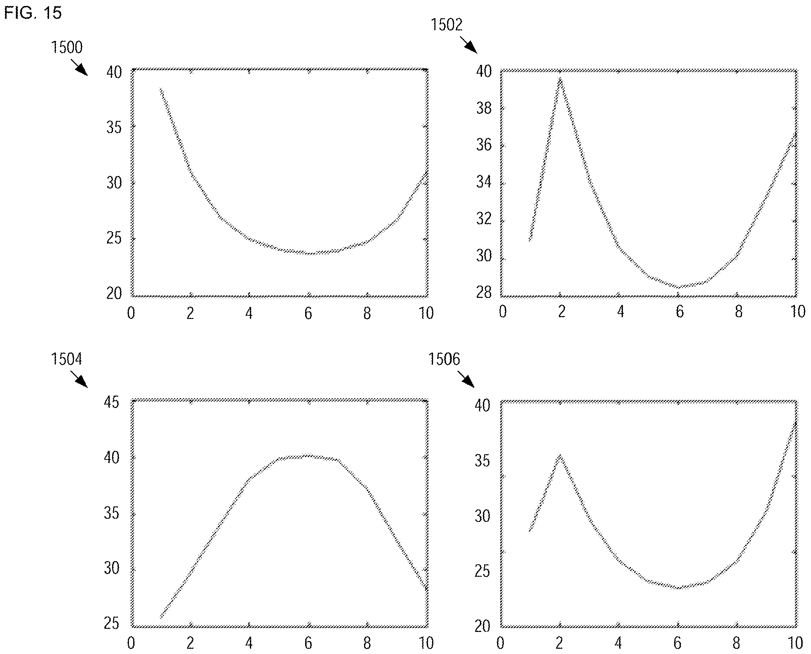

FIG. 15 depicts plots of the peak signal-to-noise values for images **800, 802, 804,** and **806** after deconvolution. Plots **1500, 1502, 1504,** and **1506** show the candidate-wise peak signal-to-noise (PSNR) values versus different kernels, where the correct kernel in each plot is 1, 2, 6, and 10, respectively.

As discussed above, the present invention augments the use of longitudinal motion between the light distribution and the focal-plane array by also inducing relative transverse motion between them. This enables a depth-encoding EDOF blur kernel to be obtained. In some embodiments of the present invention, the transverse motion comprises only linear translation along only one dimension within a plane that is orthogonal to optical axis **110.** It should be noted, however, that even simple one-dimensional translation affords embodiments of the present invention advantages over the prior art. These advantages can be seen by an example wherein a depth-encoded EDOF blur kernel is obtained by translating focal-plane array **104** linearly in the x direction with a speed v. The kernel is then given by:

$$h_{S,2}(xy, z_0) = \int_0^T h(x - \eta(t), y, z_o, \zeta(t') - z)dz,\qquad(15)$$

where $\zeta(t) = \alpha t$ and $\eta(t) = \nu t$.

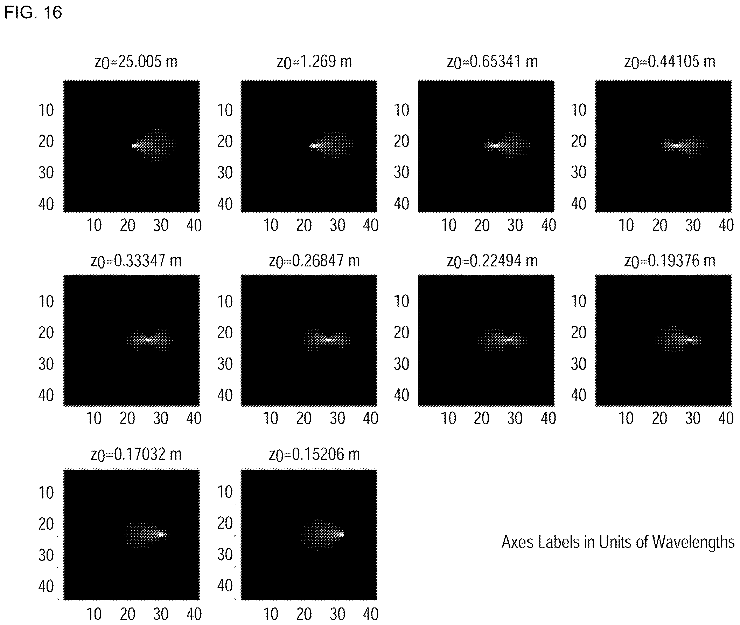

FIG. 16 depicts plots of EDOF kernels taken with induced longitudinal and linear transverse motion. FIG. 16 shows the kernel for the target object distances with $\nu = 10$ pixels/T.

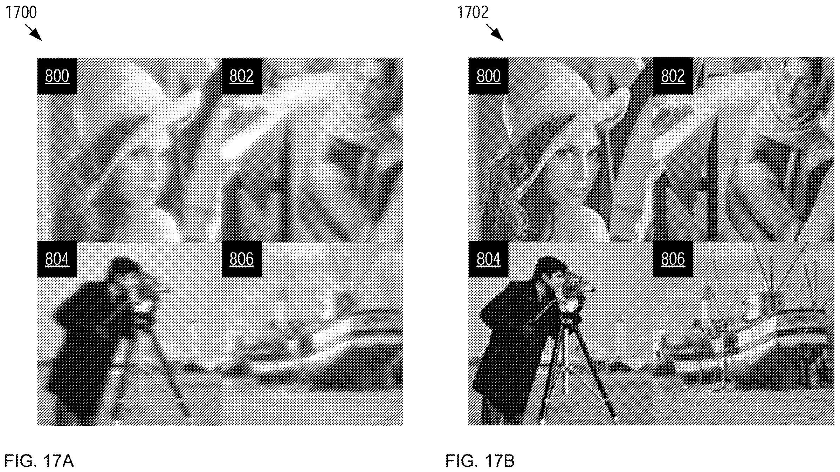

FIG. 17A depicts reconstructed images **800, 802, 804,** and **806** as corrupted by the EDOF kernels taken with induced longitudinal motion between light distribution LD(x) and focal-plane array **104** and transverse motion of the focal-plane array in one dimension.

FIG. 17B depicts the reconstructed images shown in plot **1700.** Each image in plot **1702** is deconvolved with its perpetrating kernel.

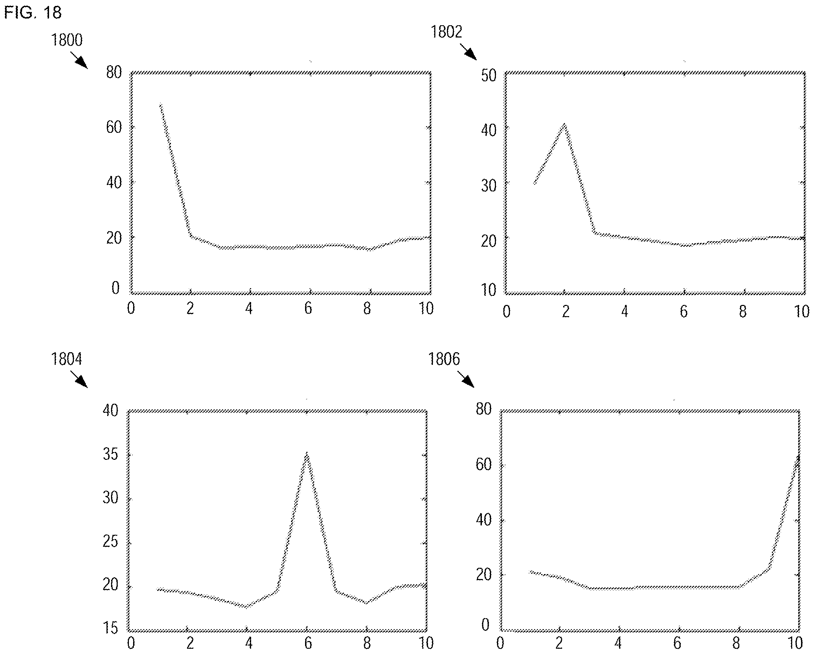

FIG. 18 depicts plots of the peak signal-to-noise values for images **800, 802, 804,** and **806** after deconvolution as depicted in plot **1702.** Plots **1800, 1802, 1804,** and **1806** show the candidate-wise peak signal-to-noise (PSNR) values versus different kernels, where the correct kernel in each plot is 1, 2, 6, and 10, respectively. Note the bottom left and top right images have an appearance characteristic of handshake in the x direction. This effect is attributed to greatest power residing in the side lobes of the corresponding dumbbell-shaped EDOF PSF.

It should be noted that, although it appears the optimal focus distance from images can be uniquely determined from a two-dimensional translation (*i.e.,* focus and a one-dimensional translation of focal-plane array **104** in the x-y plane), in practice an ambiguity exists between the position of the PSF and the true location on the focal-plane array that corresponds to best focus. Since the contents of the true image are not known prior to in-focus capture, the optimal focal position cannot be determined without employing another metric - namely, adding another dimension of transverse motion between the light distribution and the focal-plane array.

Returning now to the illustrative embodiment, in operation **203,** actuator **106** moves focal-plane array **104** in a circular path that is temporally aligned with the duration of the exposure frame of camera **100.** Rotating the focal-plane array as a function of time enables the true object path to be uniquely encoded into the measurement. Rotation of the sensor array through angle, $\theta$, during the exposure frame gives rise to blur kernels of the form:

$$h_{S,3}(x, y, z_0) = \int_0^T h(x - \eta(t), y - \xi(t), z_o, \zeta(t) - z)dt,\qquad(16)$$

where $\eta(t) = A\cos(\theta t)$, $\xi(t) = A\sin(\theta t)$, and $\zeta(t) = \alpha t$.

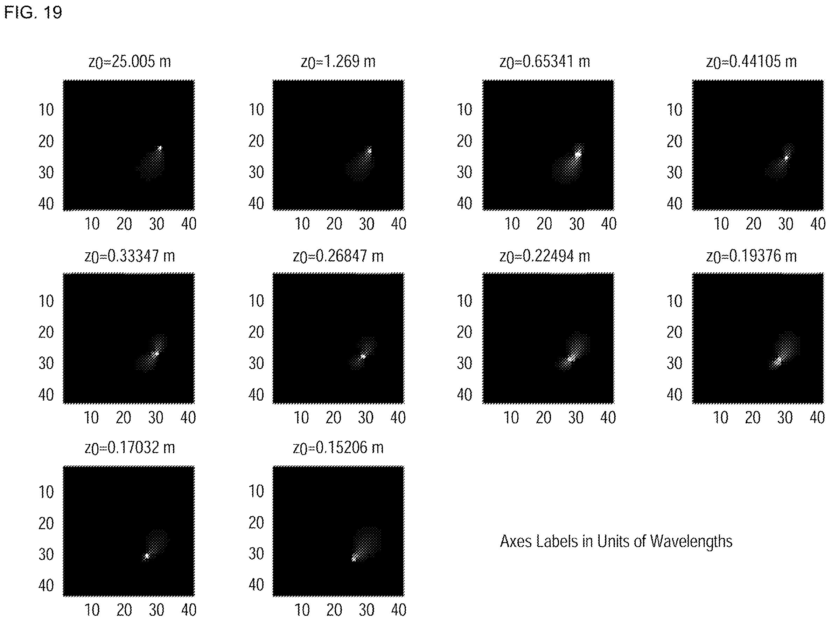

FIG. 19 depicts plots of blur kernels taken with induced longitudinal motion between light distribution LD(x) and focal-plane array **104** and transverse motion of the focal-plane array in two dimensions. FIG. 19 shows the kernel that results from translating focal-plane array **104** in a quarter circle having a 5-pixel radius during exposure frame **302.**

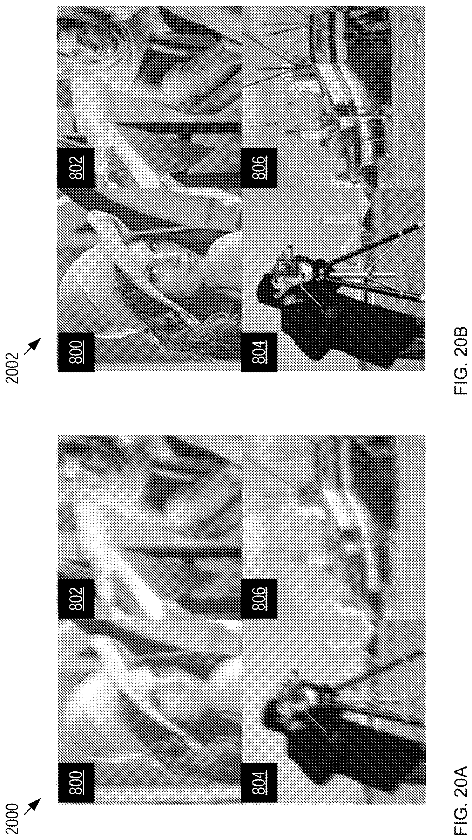

FIG. 20A depicts reconstructed images **800, 802, 804,** and **806** as corrupted by the EDOF kernels taken with induced longitudinal motion between light distribution **LD(x)** and focal-plane array **104** and transverse motion of the focal-plane array in two dimensions.

FIG. 20B depicts the reconstructed images shown in plot **2000.** Each image in plot **2002** is deconvolved with its corresponding blur kernel.

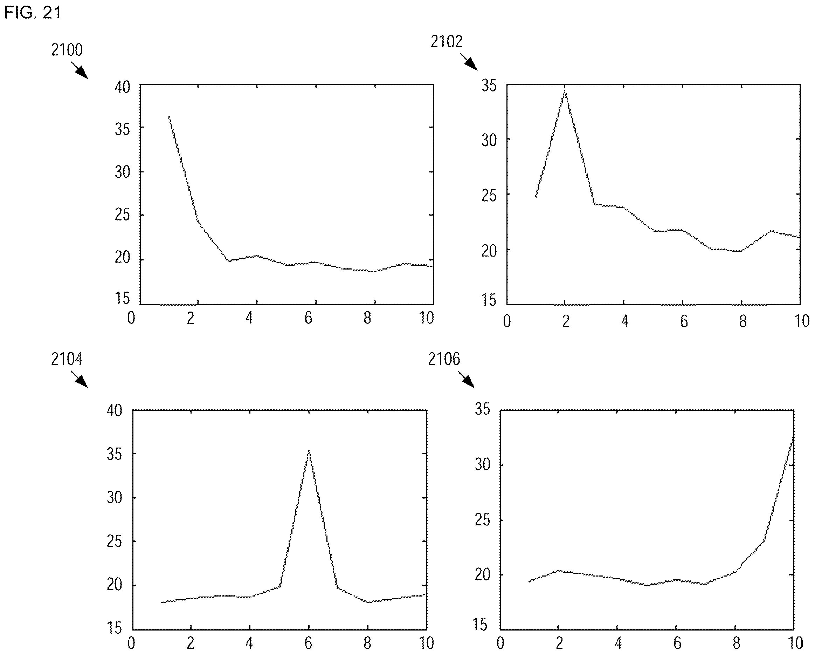

FIG. 21 depicts plots of the peak signal-to-noise values for images **800, 802, 804,** and **806** after deconvolution as depicted in plot **2002.** Plots **2000, 2002, 2004,** and **2006** show the candidate-wise peak signal-to-noise (PSNR) values versus different kernels, where the correct kernel in each plot is 1, 2, 6, and 10, respectively. Note the bottom left and top right images have an appearance characteristic of handshake in the x direction. This effect is attributed to greatest power residing in the side lobes of the corresponding dumbbell-shaped EDOF PSF.

As discussed above and with respect to two-dimensional detector translation, the PSNR data shown in FIG. 21 suggests that the maximum focus and correct kernel is identified with this framework. It should be noted that, although error criteria were used to evaluate accuracy in the simulations, other approaches can be used without departing from the scope of the present invention. As demonstrated herein, the present invention provides a uniquely-identifiable PSF for autofocus and ranging applications.

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A method for forming a digital image of a scene, the method comprising:

   forming an optical image at a first position on a first axis;
   locating a focal-plane array at a second position on the first axis, wherein the first position and second position are separated along the first axis by a first distance;
   receiving a light distribution at the focal-plane array, the light distribution being based on the optical image and the first distance;
   converting the light distribution into a digital output signal over a first exposure period;
   controlling at least one of the first position and the second position to scan the first distance through a first range during the first exposure period;

   **characterized by**:

   inducing a first relative motion between the focal-plane array and the light distribution during the first exposure period, wherein the first relative motion is unaligned with the first axis;
   wherein the scanning of the first distance through the first range and the first relative motion collectively encode the digital output signal to form an encoded digital output signal.

2. The method of claim 1 wherein the first relative motion is within a plane that is substantially orthogonal to the first axis.

3. The method of claim 1 wherein the first relative motion is a two-dimensional motion within a plane that is substantially orthogonal to the first axis.

4. The method of claim 1 wherein the first relative motion includes a curved path within a plane that is substantially orthogonal to the first axis.

5. The method of claim 1 wherein the first relative motion is induced by moving at least one of (1) the focal-plane array and (2) at least a portion of a lens system that forms the optical image.

6. The method of claim 1 wherein the first relative motion is induced by enabling at least one of the focal-plane array and a lens system that forms the optical image to move in response to an externally applied motion.

7. The method of claim 1 further comprising estimating the digital image based on the first relative motion and the optical image.

8. The method of claim 1 further comprising estimating the digital image by operations comprising:

   receiving a plurality of electrical signals at a processor, the plurality of electrical signals being generated by the focal-plane array based on the light distribution received throughout the first exposure period, wherein the plurality of electrical signals collectively define an encoded digital output signal; and
   deconvolving the encoded digital output signal with a function that is based on a blur kernel for a lens system that forms the optical image.

9. The method of claim 8 further comprising determining the blur kernel based on a calibrated multidimensional impulse response of the lens system and the first relative motion.

10. The method of claim 1 further comprising:

determining a focal state of the scene based on the first relative motion between the focal-plane array and the light distribution during the first exposure period;
fixing the relative position between the focal-plane array and the light distribution; and
recording an image of the scene during a second exposure period.

11. A computational imaging system comprising:

a lens system operative for forming an optical image of a scene at a first position along a first axis; and
a focal-plane array that is located at a second position along the first axis such that the focal-plane array receives a light distribution that is based on the optical image and a first distance between the first position and the second position along the first axis, wherein the lens system and focal-plane array are dimensioned and arranged to scan the first distance through a first range during the exposure period, and wherein the focal-plane array is operative for converting the light distribution into a digital image over an exposure period;

**characterized in that**:

the lens system and focal-plane array are dimensioned and arranged to enable a relative motion between the focal-plane array and the light distribution during the exposure period, the relative motion being unaligned with the first axis; and
wherein the relative motion and the scan of the first distance through the first range during the exposure period is operative for encoding the digital output signal to form an encoded digital output signal.

12. The system of claim 11 further comprising an actuator that is operative for imparting the relative motion between the focal-plane array and the light distribution.

13. The system of claim 12 wherein the actuator is operative for imparting the relative motion such that it is within a first plane that is substantially orthogonal to the first axis.

14. The system of claim 13 wherein the actuator is operative for imparting the relative motion such that it is a two-dimensional motion within the first plane.

15. The system of claim 13 wherein the actuator is operative for imparting the relative motion such that it is a curved motion within the first plane.

16. The system of claim 11 further comprising a processor that is operative for computing a digital image of the scene by deconvolving the encoded digital output signal with a function that is based on a blur kernel for the lens system.

**Patentansprüche**

1. Verfahren zum Erzeugen eines digitalen Bildes einer Szene, wobei das Verfahren Folgendes beinhaltet:

Erzeugen eines optischen Bildes an einer ersten Position auf einer ersten Achse;
Positionieren eines Fokalebenen-Array in einer zweiten Position auf der ersten Achse, wobei die erste Position und die zweite Position entlang der ersten Achse durch einen ersten Abstand voneinander getrennt sind;
Empfangen einer Lichtverteilung am Fokalebenen-Array, wobei die Lichtverteilung auf dem optischen Bild und dem ersten Abstand basiert;
Umwandeln der Lichtverteilung in ein digitales Ausgangssignal über eine erste Belichtungsperiode;
Steuern der ersten Position und/oder der zweiten Position zum Scannen des ersten Abstands durch einen ersten Bereich während der ersten Belichtungsperiode;
**gekennzeichnet durch**:

Induzieren einer ersten relativen Bewegung zwischen dem Fokalebenen-Array und der Lichtverteilung während der ersten Belichtungsperiode, wobei die erste relative Bewegung mit der ersten Achse unausgerichtet ist;

wobei das Scannen des ersten Abstands durch den ersten Bereich und die erste relative Bewegung kollektiv das digitale Ausgangssignal codieren, um ein codiertes digitales Ausgangssignal zu erzeugen.

2. Verfahren nach Anspruch 1, wobei die erste relative Bewegung in einer Ebene ist, die im Wesentlichen orthogonal zur ersten Achse ist.

3. Verfahren nach Anspruch 1, wobei die erste relative Bewegung eine zweidimensionale Bewegung in einer Ebene ist, die im Wesentlichen orthogonal zur ersten Achse ist.

4. Verfahren nach Anspruch 1, wobei die erste relative Bewegung eine gekrümmte Bahn in einer Ebene beinhaltet, die im Wesentlichen orthogonal zur ersten Achse ist.

5. Verfahren nach Anspruch 1, wobei die erste relative Bewegung durch Bewegen des (1) Fokalebenen-Array und/oder (2) wenigstens eines Teils eines Linsensystems induziert wird, das das optische Bild erzeugt.

6. Verfahren nach Anspruch 1, wobei die erste relative Bewegung durch Ermöglichen induziert wird, dass sich das Fokalebenen-Array und/oder ein Linsensystem, das das optische Bild erzeugt, als Reaktion auf eine extern aufgebrachte Bewegung bewegt.

7. Verfahren nach Anspruch 1, das ferner das Schätzen des digitalen Bildes auf der Basis der ersten relativen Bewegung und des optischen Bildes beinhaltet.

8. Verfahren nach Anspruch 1, das ferner das Schätzen des digitalen Bildes durch Operationen beinhaltet, die Folgendes beinhalten:

Empfangen einer Mehrzahl von elektrischen Signalen an einem Prozessor, wobei die Mehrzahl von elektrischen Signalen durch das Fokalebenen-Array auf der Basis der während der ersten Belichtungsperiode empfangenen Lichtverteilung generiert wird, wobei die Mehrzahl von elektrischen Signalen kollektiv ein codiertes digitales Ausgangssignal definiert; und
Entfalten des codierten digitalen Ausgangssignals mit einer Funktion, die auf einem Unschärfe-Kernel für ein Linsensystem basiert, das das optische Bild erzeugt.

9. Verfahren nach Anspruch 8, das ferner das Bestimmen des Unschärfe-Kernels auf der Basis einer kalibrierten mehrdimensionalen Impulsreaktion des Linsensystems und der ersten relativen Bewegung beinhaltet.

10. Verfahren nach Anspruch 1, das ferner Folgendes beinhaltet:

Bestimmen eines Fokalzustands der Szene auf der Basis der ersten relativen Bewegung zwischen dem Fokalebenen-Array und der Lichtverteilung während der ersten Belichtungsperiode;
Fixieren der relativen Position zwischen dem Fokalebenen-Array und der Lichtverteilung; und
Aufzeichnen eines Bildes der Szene während einer zweiten Belichtungsperiode.

11. Rechnerisches Bildgebungssystem, das Folgendes umfasst:

ein Linsensystem mit der Aufgabe, ein optisches Bild einer Szene in einer ersten Position entlang einer ersten Achse zu erzeugen; und
ein Fokalebenen-Array, das sich in einer zweiten Position entlang der ersten Achse befindet, so dass das Fokalebenen-Array eine Lichtverteilung empfängt, die auf dem optischen Bild und einem ersten Abstand zwischen der ersten Position und der zweiten Position entlang der ersten Achse basiert, wobei das Linsensystem und das Fokalebenen-Array so dimensioniert und ausgelegt sind, dass sie den ersten Abstand durch einen ersten Bereich während der Belichtungsperiode scannen, und wobei das Fokalebenen-Array die Aufgabe hat, die Lichtverteilung in ein digitales Bild über eine Belichtungsperiode umzuwandeln;

**dadurch gekennzeichnet, dass**:

das Linsensystem und das Fokalebenen-Array so dimensioniert und ausgelegt sind, dass sie eine relative Bewegung zwischen dem Fokalebenen-Array und der Lichtverteilung während der Belichtungsperiode ermöglichen, wobei die relative Bewegung mit der ersten Achse unausgerichtet ist; und
wobei die relative Bewegung und der Scan des ersten Abstands durch durch den ersten Bereich während der Belichtungsperiode die Aufgabe hat, das digitale Ausgangssignal zu codieren, um ein codiertes digitales Ausgangssignal zu erzeugen.

12. System nach Anspruch 11, das ferner einen Aktuator umfasst mit der Aufgabe, die relative Bewegung zwischen dem Fokalebenen-Array und der Lichtverteilung zu vermitteln.

13. System nach Anspruch 12, wobei der Aktuator die Aufgabe hat, die relative Bewegung so zu vermitteln, dass sie in einer ersten Ebene liegt, die im Wesentlichen orthogonal zur ersten Achse ist.

14. System nach Anspruch 13, wobei der Aktuator die Aufgabe hat, die relative Bewegung so zu vermitteln, dass sie eine zweidimensionale Bewegung in der ersten Ebene ist.

15. System nach Anspruch 13, wobei der Aktuator die Aufgabe hat, die relative Bewegung so zu vermitteln, dass sie eine gekrümmte Bewegung in der ersten Ebene ist.

16. System nach Anspruch 11, das ferner einen Prozessor umfasst mit der Aufgabe, ein digitales Bild der Szene durch Entfalten des codierten digitalen Ausgangssignals mit einer Funktion zu berechnen, die auf einem Unschärfe-Kernel für das Linsensystem basiert.


**Revendications**

1. Procédé pour former une image numérique d'une scène, le procédé consistant à :

   former une image optique à hauteur d'une première position sur un premier axe ;
   localiser une matrice plan focal à hauteur d'une deuxième position sur le premier axe, dans lequel la première position et la deuxième position sont séparées le long du premier axe par une première distance ;
   recevoir une distribution de lumière à hauteur de la matrice plan focal, la distribution de lumière étant basée sur l'image optique et la première distance ;
   convertir la distribution de lumière en un signal de sortie numérique sur une première période d'exposition ;
   contrôler au moins une de la première position et de la deuxième position pour balayer la première distance dans une première plage au cours de la première période d'exposition ;
   **caractérisé par**
   la réduction d'un premier mouvement relatif entre la matrice plan focal et la distribution de lumière au cours de la première période d'exposition, dans lequel le premier mouvement relatif n'est pas aligné sur le premier axe ;
   dans lequel le balayage de la première distance dans la première plage et le premier mouvement relatif, collectivement, codent le signal de sortie numérique pour former un signal de sortie numérique codé.

2. Procédé selon la revendication 1, dans lequel le premier mouvement relatif se situe dans un plan qui est sensiblement orthogonal par rapport au premier axe.

3. Procédé selon la revendication 1, dans lequel le premier mouvement relatif est un mouvement bidimensionnel se situant dans un plan qui est sensiblement orthogonal par rapport au premier axe.

4. Procédé selon la revendication 1, dans lequel le premier mouvement relatif inclut une trajectoire courbe dans un plan qui est sensiblement orthogonal par rapport au premier axe

5. Procédé selon la revendication 1, dans lequel le premier mouvement relatif est induit en déplaçant au moins une de (1) la matrice plan focal et (2) au moins une partie d'un système de lentille qui forme l'image optique.

6. Procédé selon la revendication 1, dans lequel le premier mouvement relatif est induit en permettant au moins une de la matrice plan focal et un système de lentille, qui forme l'image optique, de se déplacer en réponse à un mouvement appliqué extérieurement.

7. Procédé selon la revendication 1, consistant en outre à estimer l'image numérique sur la base du premier mouvement relatif et de l'image optique.

8. Procédé selon la revendication 1, consistant en outre à estimer l'image numérique en procédant aux opérations consistant à :

recevoir une pluralité de signaux électriques à hauteur d'un processeur, la pluralité de signaux électriques étant générée par la matrice plan focal, sur la base de la distribution de lumière reçue au cours de la première période d'exposition, dans lequel la pluralité des signaux électriques définit collectivement un signal de sortie numérique codé ; et

opérer une déconvolution du signal de sortie numérique codé avec une fonction qui est basée sur un grain flou pour un système de lentille qui forme l'image optique.

9. Procédé selon la revendication 8, consistant en outre à déterminer le grain flou sur la base d'une réponse impulsionnelle multidimensionnelle calibrée du système de lentille et du premier mouvement relatif.

10. Procédé selon la revendication 1, consistant en outre à :

déterminer un état focal de la scène sur la base du premier mouvement relatif entre la matrice plan focal et la distribution de lumière au cours de la première période d'exposition ;

fixer la position relative entre la matrice plan focal et la distribution de lumière ; et

enregistrer une image de la scène au cours d'une deuxième période d'exposition.

11. Système d'imagerie informatique, comprenant :

un système de lentille opérationnel pour former une image optique d'une scène à hauteur d'une première position le long d'un premier axe ; et

une matrice plan focal qui est située à hauteur d'une deuxième position, le long du premier axe, de sorte que la matrice de plan focal reçoit une distribution de lumière qui est basée sur l'image optique et une première distance entre la première position et la deuxième position le long du premier axe, dans lequel le système de lentille et la matrice plan focal sont dimensionnés et agencés de sorte à balayer la première distance dans une première plage au cours de la période d'exposition, et dans lequel la matrice plan focal est opérationnelle pour convertir la distribution de lumière en une image numérique sur une période d'exposition ;

**caractérisé en ce que** :

le système de lentille et la matrice plan focal sont dimensionnés et agencés de sorte à permettre un mouvement relatif entre la matrice plan focal et la distribution de lumière au cours de la période d'exposition, le mouvement relatif n'étant pas aligné sur le premier axe ; et

dans lequel le mouvement relatif et le balayage de la première distance dans la première gamme au cours de la période d'exposition est opérationnel pour coder le signal de sortie numérique pour former un signal de sortie numérique codé.

12. Système selon la revendication 11, comprenant en outre un actionneur qui est opérationnel pour imprimer le mouvement relatif entre la matrice plan focal et la distribution de lumière.

13. Procédé selon la revendication 12, dans lequel l'actionneur est opérationnel pour imprimer le mouvement relatif de sorte qu'il se situe dans un premier plan qui est sensiblement orthogonal par rapport au premier axe.

14. Procédé selon la revendication 13, dans lequel l'actionneur est opérationnel pour imprimer le mouvement relatif de sorte qu'il s'agisse d'un mouvement bidimensionnel dans le premier plan.

15. Procédé selon la revendication 13, dans lequel l'actionneur est opérationnel pour imprimer le mouvement relatif de sorte qu'il soit un mouvement courbe dans le premier plan.

16. Procédé selon la revendication 11, comprenant en outre un processeur qui est opérationnel pour calculer une image numérique de la scène en procédant à une déconvolution du signal de sortie numérique codé avec une fonction qui est basée sur un grain flou pour le système de lentille.

FIG. 1

FIG. 2

200

201 — Enable focal-plane array 104 to record light distribution LD(z) during exposure period 302

202 — Sweep the focus of lens 102 through focal range 116 over the duration of exposure period 302

203 — Induce transverse motion of focal-plane array 104 over the duration of exposure period 302

204 — Provide encoded digital output signal 114 to processor 108

205 — Reconstruct a digital image of scene 112 via deconvolution of encoded digital output signal 114

206 — Establish the focal state of scene 112 (Optional)

207 — Stop transverse motion of focal-plane array 104 (Optional)

208 — Capture a high transverse resolution image of scene 112 (Optional)

EP 3 143 583 B1

FIG. 3

EP 3 143 583 B1

FIG. 4

FIG. 5

500

EP 3 143 583 B1

FIG. 6A

FIG. 6B

EP 3 143 583 B1

FIG. 7

700

702

704

706

708

710

EP 3 143 583 B1

FIG. 8

FIG. 9

Focal-plane Array 104

Lens 102

100

Axis 110

806

804

802

800

0

0.15

0.22

1.3

25

z-distance in meters

z
x
y

FIG. 10B

FIG. 10A

FIG. 11

$z_0$=25.005 m  $z_0$=1.269 m  $z_0$=0.65341 m  $z_0$=0.44105 m

$z_0$=0.33347 m  $z_0$=0.26847 m  $z_0$=0.22494 m  $z_0$=0.19376 m

$z_0$=0.17032 m  $z_0$=0.15206 m

Axes Labels in Units of Wavelengths

EP 3 143 583 B1

FIG. 12

FIG. 13

Axes Labels in Units of Wavelengths

EP 3 143 583 B1

1400

800      802

804      806

FIG. 14A

1402

800      802

804      806

FIG. 14B

FIG. 15

1500

1502

1504

1506

FIG. 16

z0=25.005 m    z0=1.269 m    z0=0.65341 m    z0=0.44105 m

z0=0.33347 m    z0=0.26847 m    z0=0.22494 m    z0=0.19376 m

z0=0.17032 m    z0=0.15206 m

Axes Labels in Units of Wavelengths

FIG. 17A

FIG. 17B

FIG. 18

1800

1802

1804

1806

EP 3 143 583 B1

FIG. 19

z0=25.005 m

z0=1.269 m

z0=0.65341 m

z0=0.44105 m

z0=0.33347 m

z0=0.26847 m

z0=0.22494 m

z0=0.19376 m

z0=0.17032 m

z0=0.15206 m

Axes Labels in Units of Wavelengths

FIG. 20A

FIG. 20B

FIG. 21

2100

2102

2104

2106

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62011129 A
- US 7432843 B, Brady
- US 7463174 B
- US 7463179 B

### Non-patent literature cited in the description

- **WAGADARIKAR et al.** Single disperser design for coded aperture snapshot spectral imaging. *Applied Optics,* 2008, vol. 47, B44-B51
- **LLULL et al.** Coded aperture compressive temporal imaging. *Optics Express,* 2013, vol. 21, 10526-10545
- **YUAN et al.** Low-Cost Compressive Sensing for Color Video and Depth. *arXiv preprint arXiv: 1402.6932,* 2014
- **BRADY et al.** Optical imaging and spectroscopy. John Wiley & Sons, 2009
- **KITTLE et al.** Multi-frame image estimation for coded aperture snapshot spectral imagers. *Applied Optics,* 2010, vol. 49, 6824-6833
- **JOSHI et al.** PSF estimation using sharp edge prediction. *Computer Vision and Pattern Recognition, Proceedings of the 2008 IEEE Conference on Computer Vision and Pattern Recognition,* 23 June 2008, 1-8
- **LIU et al.** Extended depth-of-field microscopic imaging with a variable focus microscope objective. *Optics Express,* 2011, vol. 19, 353-362